# EUROPEAN PATENT APPLICATION

(11) **EP 3 476 702 A1**
(43) Date of publication of application: **01.05.2019**
(21) Application number: 17461627.6
(22) Date of filing: 26.10.2017
(51) Int. Cl.: B62D 63/06, H02K 7/18, F02D 25/00, F16M 1/04, F01D 15/10, F01D 25/28, H02P 9/00

(54) **PORTABLE POWER SYSTEM AND RELATED METHOD**

(71) Applicant: General Electric Company, Schenectady, NY 12345 (US)
(72) Inventor: PIENIECKI, Przemyslaw Andrzej, 02-256 Warszawa (PL); KLEEN, Randall John, Houston, TX 77015 (US); NGUYEN, Tho Vankhanh, Houston, TX 77015 (US); OLZAK, Bartosz, 02-256 Warszawa (PL); ROSS, Harley Matthew, Houston, TX 77015 (US)
(74) Representative: Lee, Brenda

(57) **Abstract**

Various embodiments include portable power systems, along with related transportation methods. In some cases, the portable power system includes: a dual-drive gas turbomachine (GT) sized to fit on a roadway-compliant trailer; and a pair of dynamoelectric machines, each having an equally rated power output, sized to fit on a pair of roadway-compliant trailers distinct from the roadway-compliant trailer for the GT, wherein each of the pair of dynamoelectric machines is configured to couple with the dual-drive GT to provide a power output at a location.

## Description

### TECHNICAL FIELD

The subject matter disclosed herein relates to power systems. More particularly, the subject matter disclosed herein relates to portable power systems and methods for configuring such systems.

### BACKGROUND

Portable power systems can be beneficial in a variety of applications. For example, during temporary operations, it may be useful to have a large power supply available for powering one or more systems. Additionally, in remote locations where a conventional large-scale power system is not practical, a portable system may be beneficial. However, conventional portable power systems are restricted by their means of transportation. These conventional systems may fail to meet the needs of the end user.

### BRIEF DESCRIPTION

Various embodiments include portable power systems, along with related transportation methods. A first aspect includes a portable power system having: a dual-drive gas turbomachine (GT) sized to fit on a roadway-compliant trailer; and a pair of dynamoelectric machines, each having an equally rated power output, sized to fit on the roadway-compliant trailer with the dual-drive GT, wherein each of the pair of dynamoelectric machines is configured to couple with the dual-drive GT to provide a power output at a location.

A second aspect includes a method including: loading a power system on a set of three distinct roadway-compliant trailers for transport to a remote location, the power system having: a dual-drive gas turbomachine (GT); and a pair of dynamoelectric machines, each having an equally rated power output; and assembling the power system at the remote location, the assembling including coupling each of the pair of dynamoelectric machines with the dual-drive GT to provide a power output at the remote location.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic depiction of a portable power system according to various embodiments of the disclosure.
FIG. 2 shows a perspective view of a trailer for transporting the portable power system of FIG. 1, according to various particular embodiments of the disclosure.
FIG. 3 shows a flow diagram illustrating a process according to various embodiments of the disclosure.
FIG. 4 shows a schematic depiction of a process in the flow diagram of FIG. 3, according to various particular embodiments of the disclosure.

It is noted that the drawings of the various aspects of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION

As indicated herein, the subject matter disclosed relates to power systems. More particularly, the subject matter disclosed herein relates to a portable power system that is configured to meet roadway travel constraints and adapt to dynamic power demands.

In the following description, reference is made to the accompanying drawings that form a part thereof, and in which is shown by way of illustration specific example embodiments in which the present teachings may be practiced. These embodiments are described in sufficient detail to enable those skilled in the art to practice the present teachings and it is to be understood that other embodiments may be utilized and that changes may be made without departing from the scope of the present teachings. The following description is, therefore, merely illustrative.

As noted herein, conventional portable power systems are restricted by their means of transportation. These conventional systems may fail to meet the needs of the end user. For example, conventional power systems include a turbine (e.g., gas turbine) coupled with a dynamoelectric machine (e.g., a generator) for outputting power at a location. The power output of this system is limited by the size of the dynamoelectric machine. Because portable power systems are transported using roadways, the power output (and adaptability) of these systems is inherently limited by the transportation restrictions of those roadways.

In contrast to conventional power systems, a portable power system capable of being transported by roadway and providing dynamic power output is disclosed according to various embodiments. In some particular cases, the portable power system includes a gas turbomachine and a pair of equally sized dynamoelectric machines sized to travel on corresponding roadway-compliant trailers. The gas turbomachine (GT) can be a dual-drive GT configured to provide output at two dynamoelectric machines simultaneously. In these cases, the equally sized dynamoelectric machines allow for shipment of the entire power system on a set of roadway-compliant trailers, and further enhance the efficiency with which such a system can be delivered and assembled. In some cases, each dynamoelectric machine has a rated mega-watt (MW) power output of less than approximately 40 MW. In particular cases, a combined power output rating for the pair of dynamoelectric machines is greater than approximately 50 MW.

In some particular embodiments, a method includes: loading a gas turbomachine on a roadway-compliant trailer, loading a first dynamoelectric machine on the roadway-compliant trailer, loading a second dynamoelectric machine on the roadway-compliant trailer, and delivering the loaded roadway-compliant trailer to a usage location. In some cases, the method further includes unloading and/or assembling the roadway-compliant trailer at the usage location. The process of unloading/assembling can include coupling the gas turbomachine with the first dynamoelectric machine and the second dynamoelectric machine, where each of the dynamoelectric machines is coupled at a distinct end of the gas turbomachine.

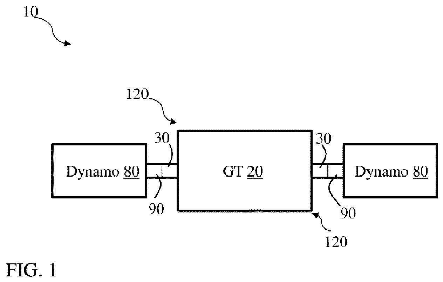

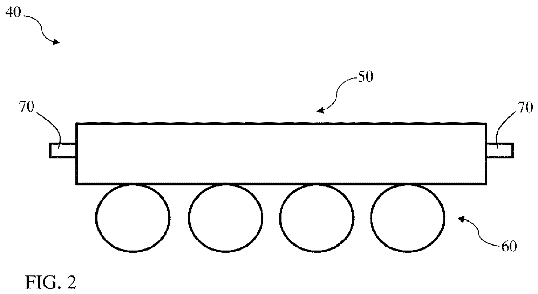

FIG. 1 shows a schematic depiction of a portable power system 10 according to particular embodiments. In various embodiments, the portable power system 10 can include a dual-drive gas turbomachine (GT) 20, such as a dual-drive gas turbine. The dual-drive GT 20 can include conventional GT components such as a compressor section, combustor section and turbine section, for converting the thermal energy of gas flow into rotational energy by way of two output shafts 30. In various embodiments, these output shafts 30 can be configured to couple with one or more dynamoelectric machines to provide a power output, as described herein. The dual-drive GT 20 can be sized to fit on a roadway-compliant trailer 40 for transport to a remote location (FIG. 2). As used herein, the term "remote location" refers to any location that can be reached by roadway, and is distinct from the present location of portable power system 10. A roadway-compliant trailer 40 can include a transportation vehicle capable of being pushed, pulled or otherwise moved over a roadway. As described herein, transportation of physically large systems using roadways can be particularly challenging. Various nations, states, municipalities, etc. have restrictions on the size and weight of a load that can be carried over a roadway, e.g., due to wear-and-tear on the roadway, clearances with nearby structures (e.g., overpasses or bridges), etc. While these restrictions can vary by location, systems of significant size can be difficult to transport using existing roadways.

FIG. 2 illustrates an example roadway-compliant trailer (or simply, trailer) 40 having a platform 50 for supporting a component (e.g., a dual-drive GT 20 or a dynamoelectric machine, as described herein). Platform 50 can be coupled with a set of wheels 60 for transporting the platform 50 along a roadway. It is understood that trailer 40 can additionally include conventional trailer components such as couplers 70 (e.g., one or more hitches) for connecting with a truck, as well as steering controls, driving axel(s), etc. In some cases, the roadway-compliant trailers has a dimension of approximately four (4) meters or less in height, approximately three (3) meters or less in width, and a weight of approximately 10,000 kilograms (kg) or less per axle. These dimensions may comply with roadway travel restrictions in one or more jurisdictions, such as the European Union (EU).

Returning to FIG. 1, in various embodiments, power system 10 can further include a pair of dynamoelectric machines ("dynamo") 80, e.g., electric generators or pumps. In particular cases, the dynamoelectric machines 80 include electric generators. These dynamoelectric machines 80 can have an equally rated power output, such that they are rated to output an approximately equal amount of power when operated at a load (or range of loads). The dynamoelectric machines 80, when loaded equally, can have a higher rated output capacity than the dual-drive GT 20, such that the rated output of the power system 10 is based upon the performance of the dual-drive GT 20 (which can dependent upon inlet air temperature, altitude, fuel type, etc.). In one example, each dynamoelectric machine 80 can have a rated output capability of approximately 40 mega-watts (MW) at 60 degrees Fahrenheit (F) (approximately 15 degrees Celsius (C)), such that the combined capacity of the dynamoelectric machines 80 is approximately 80 MW when paired; however, the dual-drive GT 20 may only be capable of 50 MW of power at that ambient temperature (in this example). In these cases, the performance of the dual-drive GT 20 controls the maximum output of the power system 10.

Each dynamoelectric machine 80 in the pair can include conventional dynamoelectric machine components, such as a rotor and a stator, along with sets of coils. Each dynamoelectric machine 80 includes an input shaft 90 that is configured (e.g., sized) to couple with one of the output shafts 30 of GT 20 and convert the rotational movement of the output shaft 30 into electrical energy. The shaft couplings shown in FIG. 1 are merely schematic, and not intended to depict actual coupling configurations. It is understood that any conventional shaft coupling can be used to join GT 20 and each dynamoelectric machine 80. In particular cases, each dynamoelectric machine 80 has a power output rating of less than or equal to approximately 40 MW. In some more particular cases, each dynamoelectric machine 80 has a power output rating of less than or equal to approximately 35 MW, and in some cases, can have a power output rating of less than or equal to approximately 30 MW. In various embodiments, the combined power output rating for the pair of dynamoelectric machines 80 is greater than approximately 50 MW. In particular cases, each dynamoelectric machine 80 has a weight less than approximately 80,000 kg in an eight (8)-axle trailer (or, approximately 10,000 kg per axle).

Each dynamoelectric machine 80 is sized to fit on a pair of distinct roadway-compliant trailers 40 (FIG. 2), which can be distinct from the roadway-compliant trailer 40 used to transport the dual-drive GT 20. In other terms, each of the roadway-compliant trailers 40 is sized to accommodate one of the pair of dynamoelectric machines 80, or the dual-drive GT 20. As the size of each dynamoelectric machine 80 is related to its maximum rated power output, power system 10 is configured to accommodate dynamoelectric machines 80 of different sizes/outputs.

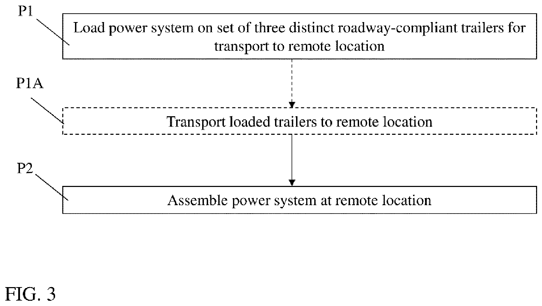

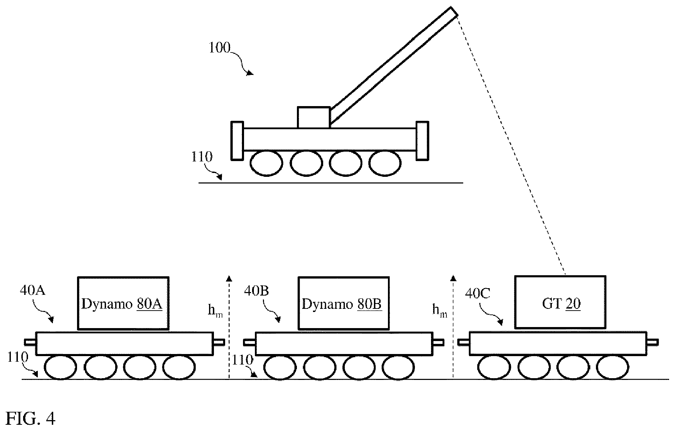

FIG. 3 shows a flow diagram illustrating processes in a method of configuring a power system (e.g., power system 10) at a remote location according to various embodiments, which is further described with reference to FIG. 4. As shown, processes can include:
Process P1: loading power system 10 on a set of three distinct roadway-compliant trailers 40 for transport to a remote location (FIG. 4). In various implementations, this process can include loading each one of the pair of dynamoelectric machines 80A, 80B on a roadway-compliant trailer 40A, 40B, and loading dual-drive GT 20 on a distinct roadway-compliant trailer 40C (FIG. 4). This loading process can be performed in any order, e.g., GT 20 first and dynamoelectric machines 80A, 80B second, or vice versa, or one dynamoelectric machine 80A first, followed by GT 20 and then second dynamoelectric machine 80B. According to some implementations, the loading process includes lifting the power system 10 (including distinct components such as dynamoelectric machines 80 and dual-drive GT 20) using a crane 100 (depicted in background). In some cases, the loading process can further include securing the pair of dynamoelectric machines 80 to distinct ones of the roadway-compliant trailers 40A, 40B at a maximum height (hₘ) of less than or equal to approximately four meters from an adjacent ground surface 110. That is, dynamoelectric machines 80 can be clamped, tied, bolted, or otherwise coupled to platform 50 of each trailer 40, and after being coupled to platform 50, can have a height that is also roadway compliant.
Process P1A (optional): transporting the distinct loaded roadway-compliant trailers 40A, 40B, 40C to the remote location. In some embodiments, this process includes driving or otherwise moving the roadway-compliant trailers 40A, 40B, 40C on a roadway. It is understood that this process can additionally include coupling the roadway-compliant trailers 40A, 40B, 40C to one or more transportation devices such as a truck or other wheel-based transportation machine, and driving the roadway-compliant transportation device(s) to the remote location.
Process P2: assembling the power system 10 at the remote location. FIG. 1 illustrates the assembled power system 10 as described herein. In various embodiments, the process of assembling power system 10 includes coupling each of the dynamoelectric machines 80 with dual-drive GT 20. In some cases, dynamoelectric machines 80 are coupled with distinct ends 120 (FIG. 1) of dual-drive GT 20 (e.g., via conventional shaft coupling at output shafts 30 of GT 20 and input shaft 90 of each dynamoelectric machine 80).

The assembled power system 10 is configured to provide a flexible power output at the remote location. That is, the assembled power system 10 can provide a power output at a first rated level (e.g., X MW output) up to a second rated level (e.g., 2X MW output). The assembled power system 10 can provide a greater power output than conventional portable systems utilizing a single dynamoelectric machine, as the power output of those single-dynamoelectric machine configurations is limited by their size (and consequently, their ability to traverse roadways). Additionally, the assembled power system 10 can be easily transported via roadway and assembled in a short period due to the smaller size of the dynamoelectric machines (relative to the conventional larger-scale dynamoelectric machines). Even further, although the power system 10 is capable of utilizing both dynamoelectric machines 80 in some cases, in other cases, one of the dynamoelectric machines 80 can be held in a standby mode and operated as a backup or supplemental dynamoelectric machine. In some cases the dual dynamoelectric machine 80 configuration can be beneficial in providing flexibility in power supply applications. For example, in particular embodiments, one of the dynamoelectric machines 80 can be loaded to produce power while the other dynamoelectric machine 80 is used to stabilize the power grid (e.g., as a synchronous condenser). In still other particular cases, using one dynamoelectric machine 80 in standby mode can provide more efficient power output in dynamic demand scenarios.

In various embodiments, processes described herein can be iterated (repeated) periodically (e.g., according to schedule of x times per y period, and/or continuously) in order to aid in providing portable power to remote locations, e.g., in providing power system 10 to one or more remote locations.

It is understood that in the processes described herein, other processes may be performed while not being explicitly described, and the order of processes can be rearranged according to various embodiments. Additionally, intermediate processes may be performed between one or more described processes. The flow of processes described herein is not to be construed as limiting of the various embodiments.

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., soldering, fastening, ultrasonic welding, bonding). In various embodiments, electronic components described as being "coupled" can be linked via conventional hard-wired and/or wireless means such that these electronic components can communicate data with one another.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Parts list:**

| | |
|---|---|
| power system | 10 |
| dual-drive gas turbomachine (GT) | 20 |
| output shaft | 30 |
| trailer | 40 |
| platform | 50 |
| wheels | 60 |
| couplers | 70 |
| dynamoelectric machine | 80 |
| input shaft | 90 |
| crane | 100 |
| ground surface | 110 |
| distinct ends | 120 |
| dynamoelectric machine | 80A |
| second dynamoelectric machine | 80B |

## Claims

1. A portable power system comprising:
a dual-drive gas turbomachine (GT) sized to fit on a roadway-compliant trailer; and
a pair of dynamoelectric machines, each having an equally rated power output, sized to fit on a pair of roadway-compliant trailers distinct from the roadway-compliant trailer for the GT, wherein each of the pair of dynamoelectric machines is configured to couple with the dual-drive GT to provide a power output at a location.

2. The portable power system of claim 1, wherein the pair of roadway-compliant trailers includes two distinct trailers each sized to accommodate one of the pair of dynamoelectric machines.

3. The portable power system of claim 1, wherein the power output rating for each of the pair of dynamoelectric machines is less than or equal to approximately 40 mega-watts (MW).

4. The portable power system of claim 3, wherein a combined power output rating for the pair of dynamoelectric machines is greater than approximately 50 MW.

5. The portable power system of claim 1, wherein each of the pair of dynamoelectric machines is configured to connect with a distinct end of the dual-drive GT to provide the power output at the location.

6. The portable power system of claim 1, wherein each of the pair of dynamoelectric machines has a weight less than or equal to approximately 80,000 kilograms.

7. The portable power system of claim 1, wherein, when loaded on the pair of roadway-compliant trailers, each of the pair of dynamoelectric machines does not exceed a maximum height of approximately four meters from an adjacent ground surface.

8. The portable power system of claim 1, wherein each of the pair of roadway-compliant trailers has a dimension of approximately equal to or less than three meters wide.

9. A method comprising:
loading a power system on a set of three distinct roadway-compliant trailers for transport to a remote location, the power system having:
a dual-drive gas turbomachine (GT); and
a pair of dynamoelectric machines, each having an equally rated power output; and
assembling the power system at the remote location, the assembling including coupling each of the pair of dynamoelectric machines with the dual-drive GT to provide a power output at the remote location.

10. The method of claim 9, wherein the coupling includes coupling each of the pair of dynamoelectric machines to a distinct end of the dual-drive GT.

11. The method of claim 9, wherein the power output rating for each of the pair of dynamoelectric machines is less than or equal to approximately 40 mega-watts (MW).

12. The method of claim 11, wherein a combined power output rating for the pair of dynamoelectric machines is greater than approximately 50 MW.

13. The method of claim 9, wherein each of the pair of dynamoelectric machines has a weight less than or equal to approximately 80,000 kg, and wherein the loading includes lifting the power system using a crane.

14. The method of claim 9, wherein the loading of the power system on the three distinct roadway-compliant trailers includes securing each of the pair of dynamoelectric machines to a distinct one of the roadway-compliant trailers at a maximum height of less than approximately four meters from an adjacent ground surface.

15. The method of claim 9, wherein the loading of the power system includes:
loading the dual-drive GT on a first roadway-compliant trailer;
loading a first one of the pair of dynamoelectric machines on a second roadway-compliant trailer; and
loading a second one of the pair of dynamoelectric machines on a third roadway-compliant trailer.
